**Europäisches Patentamt**

**European Patent Office**

**Office européen des brevets**

(19)

(11) Veröffentlichungsnummer: **0 146 680**
**B1**

(12)
# EUROPÄISCHE PATENTSCHRIFT

(45) Veröffentlichungstag der Patentschrift:
26.11.86

(21) Anmeldenummer: 84108620.0

(22) Anmeldetag: 20.07.84

(51) Int. Cl.⁴: **B 01 D 46/04**

(54) **Filteranordnung zum Entstauben von Gasen, insbesondere in Wirbelbettapparaturen.**

(30) Priorität: 25.10.83 DE 3338730

(43) Veröffentlichungstag der Anmeldung:
03.07.85 Patentblatt 85/27

(45) Bekanntmachung des Hinweises auf die Patenterteilung:
26.11.86 Patentblatt 86/48

(84) Benannte Vertragsstaaten:
AT BE CH DE FR GB IT LI NL SE

(56) Entgegenhaltungen:
EP-A-0 027 038
EP-A-0 065 094
DE-B-1 122 929
DE-B-1 293 547
DE-B-1 906 526

SOVIET INVENTIONS ILLUSTRATED, Derwent
Publications Ltd., Section Chemical Week C28,
abstract no. 49483C/28J01, 20 August 1980

(73) Patentinhaber: Hüttlin, Herbert, Lörracher Strasse
14, D-7853 Steinen (DE)

(72) Erfinder: Hüttlin, Herbert, Lörracher Strasse 14,
D-7853 Steinen (DE)

(74) Vertreter: Wuesthoff, Franz, Dr.- Ing.,
Patentanwälte Wuesthoff -v. Pechmann-
Behrens- Goetz Schweigerstrasse 2, D-8000
München 90 (DE)

EP 0 146 680 B1

## Beschreibung

Die Erfindung betrifft eine Filteranordnung zum Entstauben von Gasen, insbesondere in Wirbelbettapparaturen, mit
- mindestens einer Filterpatrone, die einen Stützring sowie einen daran befestigten Filterschlauch aufweist und an ihrem vom Stützring entfernten Ende geschlossen ist,
- mindestens einer Gasleitung, mit der sich durch den Stützring hindurch ein Gas zum pneumatischen Entstauben des Filterschlauchs in die Filterpatrone einleiten läßt und
- einem Tauchrohr, das an die Gasleitung angeschlossen ist und sich in der Filterpatrone bis in die Nähe von deren geschlossenem Ende erstreckt.

Aus EP-A-27 038 und EP-A-65 094 sind Apparaturen bekannt, bei denen ein Zwischenboden, der einen Behandlungsraum nach oben hin abgrenzt, eine Filteranordnung der beschriebenen Gattung trägt. Es sind mehrere Filterpatronen vorgesehen, deren Stützringe an entsprechenden Löchern des Zwischenbodens befestigt, beispielsweise in diese eingeschraubt sind. Jedes Tauchrohr ist in der zugehörigen Filterpatrone zentrisch angeordnet und senkrecht nach unten gerichtet. Durch die Tauchrohre wird von Zeit zu Zeit Luft in die Filterpatronen eingeblasen, wodurch diese von Staubablagerungen an der Außenseite ihres Filterschlauchs befreit werden sollen.

Gemäß EP-A 27 038 sind die Tauchrohre als Luftverteiler ausgebildet und zu diesem Zweck mindestens in einem unteren Abschnitt ihrer Gesamtlänge mit zahlreichen kleinen Luftaustrittsöffnungen versehen. Außerdem sind die Tauchrohre von je einem siebartig perforierten Diffusorrohr umschlossen, das die eingeleitete Luft noch gleichmäßiger verteilt.

Gemäß EP-A-65 094 ist jedes Tauchrohr am zugehörigen Stützring drehbar gelagert und mit gegen seine Achse seitlich versetzten Löchern versehen, sodaß der Rückstoß der austretenden Luft das Tauchrohr in Drehung versetzt. Dadurch soll die reinigende Einwirkung der aus dem Tauchrohr austretenden Luftstrahlen auf den Filterschlauch verstärkt werden.

Aus der DE-B-1 906 526 ist ferner eine Filteranordnung bekannt, die sich von der eingangs beschriebenen Gattung dadurch unterscheidet, daß das Tauchrohr in verhältnismäßig geringem Abstand unterhalb des Stützrings in einer senkrecht nach unten gerichteten Strahldüse endet und auf seiner gesamten Länge von einem Strahlrohr umschlossen ist, das gegen den Stützring abgedichtet ist und sich bis in die Nähe des geschlossenen unteren Endes des Filterschlauchs erstreckt. Dieses Ende des Filterschlauchs ist an einem Stützring befestigt, der seinerseits am Strahlrohr befestigt ist. Das Strahlrohr ist ein Doppeldiffusor mit einer in seinem mittleren Bereich, in Höhe der Strahldüse, angeordneten Mischstrecke von verengtem Querschnitt. Zum Reinigen der Filterpatrone durch die Strahldüse eingeleitetes Druckgas strömt durch das Strahlrohr nach unten und reißt durch Injektorwirkung Gas aus dem Raum oberhalb des Stützrings nach unten mit, so daß trotz geringer Druckgasmenge ein großes Spülgasvolumen innerhalb der Filterpatrone wirksam wird. Während des normalen Filterbetriebes tritt das durch den Filterschlauch gefilterte Gas von unten her in das Strahlrohr ein, passiert den Filterboden mit relativ großer Geschwindigkeit und nimmt dabei Feinstaub mit, sodaß dieser sich nicht auf dem Filterboden ablagern kann.

Bei all diesen bekannten Filteranordnungen ist es schwierig und in manchen Fällen unmöglich, Menge und Druck der Entstaubungsluft derart zu dosieren, daß der Filterschlauch einerseits zuverlässig entstaubt und andererseits durch die stoßweise eingeleitete Luft nicht zum Platzen gebracht wird. Bei den bekannten Anordnungen hängt es nämlich von unbeherrschbaren Zufällen ab, in welcher Weise das durch das Tauchrohr einströmende Gas innerhalb der Filterpatrone mit einer früher oder später einsetzenden Rückströmung kollidiert.

Der Erfindung liegt deshalb die Aufgabe zugrunde, eine Filteranordnung der eingangs beschriebenen Gattung derart weiterzubilden, daß der bzw. jeder Filterschlauch noch gründlicher und zugleich schonender entstaubt werden kann als dies bisher möglich war.

Die Aufgabe ist erfindungsgemäß dadurch gelöst, daß das Tauchrohr erst an seinem vom Stützring entfernten Ende das zum Entstauben eingeleitete Gas ausströmen läßt und daß dem Tauchrohr ein formstabiler Umlenkkörper am geschlossenen Ende der Filterpatrone gegenübersteht, der das Gas in den Ringraum zwischen Tauchrohr und Filterschlauch umlenkt.

Das zum Entstauben verwendete Gas - im allgemeinen trockene Luft mit einem Druck in der Größenordnung von 2 bis 8 bar - wird erfindungsgemäß erst am Ende des Tauchrohrs, also in der Nähe des geschlossenen Endes der Filterpatrone frei. Der formstabile Umlenkkörper lenkt das durch das Tauchrohr eingeleitete Gas derart gleichmäßig um, daß der Filterschlauch auch im Bereich des geschlossenen Endes der Filterpatrone mit Sicherheit von Ablagerungen befreit wird. Das umgelenkte Gas strömt in dem Ringraum zwischen Tauchrohr und Filterschlauch zum Stützring, durch den es die Filterpatrone verläßt. Dadurch ergibt sich eine geordnete Luftströmung am Filterschlauch entlang, deren Einwirkung auf den Filterschlauch vorhersehbar und entsprechend den betrieblichen Anforderungen bestimmbar ist, beispielsweise durch die Wahl des Durchmessers des Tauchrohrs im Verhältnis zum Durchmesser des Filterschlauchs. Dabei kann der Filterschlauch im Querschnitt unterschiedlich, beispielsweise kreis- oder sternförmig gestaltet sein.

Das Tauchrohr ist vorzugsweise wie bei den beschriebenen bekannten Filteranordnungen gleichachsig mit dem Filterschlauch angeordnet, da sich auf diese Weise eine besonders gleichmäßige Gasströmung vom geschlossenen Ende der Filterpatrone in Richtung zum Stützring erzielen läßt. In bestimmten Fällen kann jedoch eine exzentrische Anordnung des Tauchrohrs zweckmäßig sein, beispielsweise, wenn bei nicht senkrechter Anordnung der Filterpatrone mit Staubanlagerungen unterschiedlicher Dicke gerechnet werden muß.

Es kann ferner zweckmäßig sein, wenn das Tauchrohr sich in Richtung zum geschlossenen Ende der Filterpatrone hin trompetenartig erweitert. Das eingeleitete Gas wird in einem solchen Tauchrohr allmählich entspannt und läßt sich hinter dem Tauchrohr leichter umlenken, so daß es gleichmäßig rings um das Tauchrohr zum Stützring zurückströmt.

Ferner kann, wie aus DE-B-1 293 547 bei einer Filteranordnung mit verhältnismäßig kurzem Tauchrohr bekannt, das Tauchrohr mit einem elastischen Balg verbunden sein, der im Bereich des Stützrings angeordnet und durch in das Tauchrohr eingeleitetes Gas aufblähbar ist. Wenn das Gas zu Beginn eines Reinigungszyklus mehr oder weniger stoßweise eingeleitet wird, bläht es den elastischen Balg rasch auf, so daß dieser den ringförmigen Querschnitt zwischen sich und dem Stützring mehr oder weniger verengt, unter Umständen sogar vorübergehend verschließt und dadurch die Rückströmung des Gases durch den Stützring hindurch drosselt oder vorübergehend unterbindet. Dies hat zur Folge, daß der Filterschlauch auf der gesamten Länge der Filterpatrone im wesentlichen gleichmäßig aufgebläht wird und anhaftenden Staub abschüttelt.

Es ist zweckmäßig, wenn der Umlenkkörper mit dem Stützring durch einen in radialer Richtung starren Käfig verbunden ist, der den Filterschlauch abstützt. Der Käfig kann auch in axialer Richtung starr ausgebildet sein, so daß er den Umlenkkörper in bezug auf das Tauchrohr festhält.

Es ist aber auch möglich, den Umlenkkörper einfach an den Filterschlauch anzuhängen, wenn dieser hinreichend reißfest und die Filterpatrone insgesamt zumindest annähernd senkrecht angeordnet ist. Damit wird erreicht, daß von Zeit zu Zeit mehr oder weniger stoßweise durch das Tauchrohr eingeleitetes Gas den Filterschlauch mehr oder weniger schlagartig strafft, wodurch dieser auch von verhältnismäßig fest anhaftenden, filterkuchenartigen Ablagerungen befreit wird.

Besonders vorteilhaft ist es, wenn der Käfig von einer Schraubenfeder gebildet und vom Filterschlauch wellenförmig umhüllt ist und der Umlenkkörper in bezug auf das Tauchrohr axial hin- und herbeweglich ist. Der so gestaltete Käfig hindert den Filterschlauch in jedem Betriebszustand am Rollabieren, läßt aber dem Umlenkkörper die Freiheit axialer Schwingungen, durch die der Filterschlauch abwechselnd gestrafft und gelockert wird, wodurch Ablagerungen besonders rasch und gründlich abgeschüttelt werden.

Dabei ist der Umlenkkörper vorzugsweise am Tauchrohr begrenzt axial verschiebbar geführt.

In diesem Zusammenhang ist es ferner zweckmäßig, wenn das Tauchrohr zylindrisch ist und der Umlenkkörper mit einem Kolben fest verbunden ist, der im Tauchrohr abdichtend geführt ist, wenn der Umlenkkörper eine Ruhestellung einnimmt, der jedoch Gas durch das Tauchrohr ausströmen läßt, wenn der Umlenkkörper um eine bestimmte Strecke im Sinne einer Dehnung des Filterschlauchs aus seiner Ruhestellung herausbewegt ist. Damit wird erreicht, daß das von Zeit zu Zeit in das Tauchrohr eingeleitete Gas vorübergehend gestaut wird, bis es den Kolben verdrängt und somit den Umlenkkörper vom Ende des Tauchrohrs wegbewegt und dadurch den Filterschlauch gestrafft hat. Das dann schlagartig aus dem Tauchrohr ausströmende Gas bläht den Filterschlauch plötzlich auf, wodurch das Ablösen anhaftender Filterrückstände zusätzlich begünstigt wird.

Der Kolben ist vorzugsweise vollständig aus dem Tauchrohr herausbewegbar.

Besonders vorteilhaft ist es, wenn der Kolben zusammen mit dem Umlenkkörper und mindestens einer Feder ein schwingungsfähiges System bildet. Als Feder kann der Filterschlauch selbst dienen, falls er hinreichend elastisch ist.

Der Umlenkkörper ist vorzugsweise von einer gleichachsig mit dem Tauchrohr angeordneten Schüssel gebildet. Mit einem solchen Umlenkkörper läßt sich das aus dem Tauchrohr austretende Gas im wesentlichen wirbelfrei umlenken, so daß die erwünschte gleichmäßige Ringströmung entsteht.

Die Umlenkung kann noch weiter verbessert werden, wenn der Umlenkkörper einen mittleren Bodenbereich mit einer axial zum Tauchrohr gerichteten Verjüngung aufweist.

Ebenfalls zugunsten einer wirbelfreien Umlenkung und Ausbildung der erwünschten Ringströmung wirkt die weiterbildende Maßnahme, daß der Umlenkkörper einen mindestens annähernd zylindrischen sußeren Mantelbereich aufweist, der zusammen mit einem Endbereich des Tauchrohrs einen Ringspalt begrenzt.

Außerdem ist es vorteilhaft, wenn bei Anordnung mehrerer Filterpatronen die Tauchrohre sämtlicher Filterpatronen über je ein Ventil an die Gasleitung angeschlossen sind und die Ventile derart gesteuert sind, daß die Tauchrohre zyklisch nacheinander mit Gas gespeist werden; die übrigen Filterpatronen arbeiten dabei normal weiter.

Dabei kann jedem Tauchrohr ein eigener, dem zugehörigen Ventil unmittelbar vorgeschalteter Druckspeicher zugeordnet sein, der das Gas bei geöffnetem Ventil stoßartig durch daß Tauchrohr hindurch ausströmen läßt.

Ausführungsbeispiele der Erfindung werden im folgenden anhand schematischer Zeichnungen mit weiteren Einzelheiten erläutert. Es zeigt:

Fig.1 einen axialen Schnitt durch eine Wirbelbettapparatur mit einer erfindungsgemäßen Filteranordnung,

Fig.2 den Querschnitt II-II in Fig.1,

Fig.3 eine vergrößerte Einzelheit aus Fig.1,

Fig.4 den Querschnitt IV-IV in Fig.3 in stärkerer Vergrößerung, wobei die linke Hälfte einen Zustand im normalen Betrieb der Wirbelbettapparatur darstellt und die rechte Hälfte einen Zustand während des Entstaubens, und

Fig.5 einen der Fig.3 entsprechenden Axialschnitt einer weiteren Ausführungsform der Erfindung.

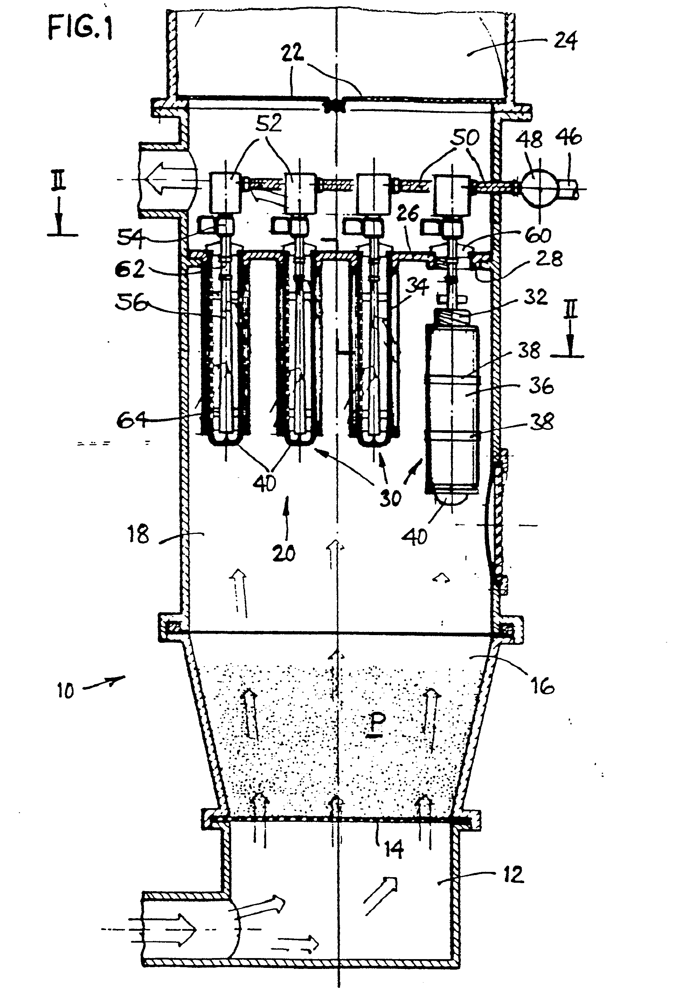

Die in Fig.1 dargestellte Wirbelbettapparatur hat einen schachtartigen Behälter 10 mit einer unten angeordneten Eintrittskammer 12, der ein Gas, beispielsweise erwärmte trockene Luft, zur Bildung eines Wirbelbettes von einem nichtdargestellten Gebläse zugeführt wird. Die Eintrittskammer 12 ist durch ein Sieb 14 von einem über ihr angeordneten Behandlungsraum 16 getrennt, in dem ein Produkt P nach einem Wirbelbettverfahren behandelt, beispielsweise granuliert oder dragiert und/oder getrocknet wird.

Der Behandlungsraum 16 erweitert sich kegelstumpfförmig nach oben und geht in einen zylindrischen Filtrationsraum 18 über, der eine Filteranordnung 20 enthält und durch Explosionsklappen 22 von einem Expansionsraum 24 getrennt ist. Die Filteranordnung 20 reinigt das für die Bildung des Wirbelbettes verwendete Gas von Staubpartikeln aus dem Produkt P, ehe das Gas aus dem Filtrationsraum 18 abgeführt wird.

Zur Filteranordnung 20 gehört ein Zwischenboden 26 mit einer größeren Anzahl, im dargestellten Beispiel zwölf, kreisförmigen Löchern, die von je einem nach unten ragenden Kragen 28 umgeben sind. An jedem Kragen 28 ist eine Filterpatrone 30 befestigt.

Jede der Filterpatronen 30 hat einen Stützring 32 mit Außengewinde, der in den zugehörigen Kragen 28 eingeschraubt ist und einen zylindrischen Käfig 34, der am zugehörigen Stützring 32 befestigt ist, sich senkrecht nach unten erstreckt und im dargestellten Beispiel aus siebartig gelochtem Blech besteht, aber auch von einem Gitter aus Kunststoff, einem Drahtgeflecht od.dgl. gebildet sein könnte.

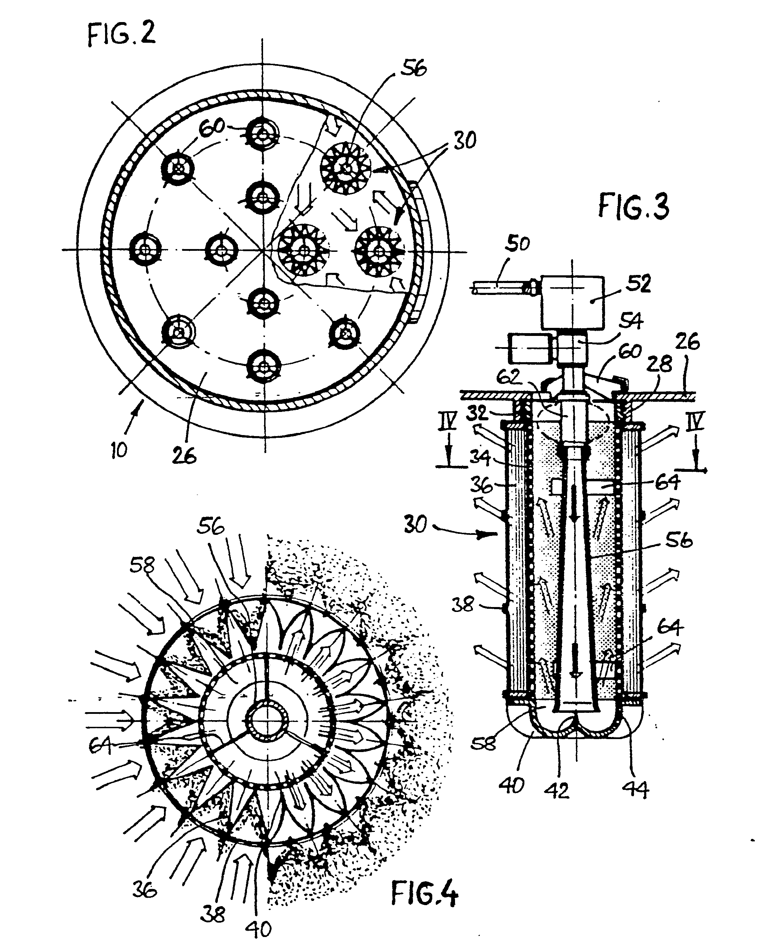

Rings um den Käfig 34 ist ein Filterschlauch 36 aus Papier oder Textilstoff od.dgl. angeordnet, der im dargestellten Beispiel derart gefaltet ist, daß er einen sternförmigen Querschnitt aufweist, wie besonders aus der linken Hälfte der Fig.4 ersichtlich ist. Der Filterschlauch 36 ist durch Bandagen 38 daran gehindert, sich vom Käfig 34 zu lösen.

Am unteren Ende des Käfigs 34 jeder Filterpatrone 30 ist ein Umlenkkörper 40 befestigt, der im dargestellten Beispiel von einer tiefen Schüssel in der Art einer Napfkuchenform gebildet ist und einen mittleren Bodenbereich mit einer zentralen, nach oben gerichteten Spitze 42 sowie einen zylindrischen äußeren Mantelbereich 44 aufweist.

Der Mantelbereich 44 ist entsprechend der Faltung des Filterschlauchs 36 gerippt, so daß er ebenfalls einen sternförmigen Querschnitt aufweist.

Der Filteranordnung 20 ist eine Gasleitung 46 zugeordnet, die einen nicht dargestellten Kompressor mit einem verteiler 48 verbindet. An den Verteiler 48 sind getrennt voneinander über je einen Schlauch 50 zwölf Druckspeicher 52 angeschlossen, die je einer der Filterpatronen 30 zugeordnet und gleichachsig mit dieser oberhalb des Zwischenbodens 26 angeordnet sind.

An jeden Druckspeicher 52 ist über ein unmittelbar unter ihm angeordnetes, elektromagnetisch betätigbares Ventil 54 ein senkrechtes Tauchrohr 56 angeschlossen, das sich gleichachsig mit der zugehörigen Filterpatrone 30 nach unten erstreckt, sich dabei trompetenartig erweitert und in Höhe der Spitze 42 des zugehörigen Umlenkkörpers 40 endet. Der Mantelbereich 44 des Umlenkkörpers 40 erstreckt sich über das untere Ende des Tauchrohrs 56 hinaus nach oben und begrenzt mit diesem einen Ringspalt 58, dessen Querschnittsfläche ungefähr mit der lichten Endquerschnittsfläche des Tauchrohrs 56 übereinstimmt.

Jedes der Tauchrohre 56 ist am Zwischenboden 26 durch einen Kranz von drei Streben 60 abgestützt. Unterhalb der Streben 60, innerhalb des Stützrings 32, ist an jedem Tauchrohr 56 ein elastisch aufblähbarer Balg 62 angeordnet, der in Fig.3 in entlastetem Zustand mit vollen Linien dargestellt und in aufgeblähtem Zustand mit gestrichelten Linien angedeutet ist. Der Balg 62 bildet im dargestellten Beispiel einen Abschnitt des Tauchrohrs 56 selbst, so daß der Druck des in das Tauchrohr eingeleiteten Gases stets sofort im Balg 62 wirksam ist.

Der unterhalb des Balges 62 angeordnete, trompetenartige Abschnitt des Tauchrohrs 56 ist durch zwei Kränze von je drei Speichen 64 am Käfig 34 abgestützt, wodurch das Tauchrohr stets gleichachsig mit dem Käfig gehalten ist.

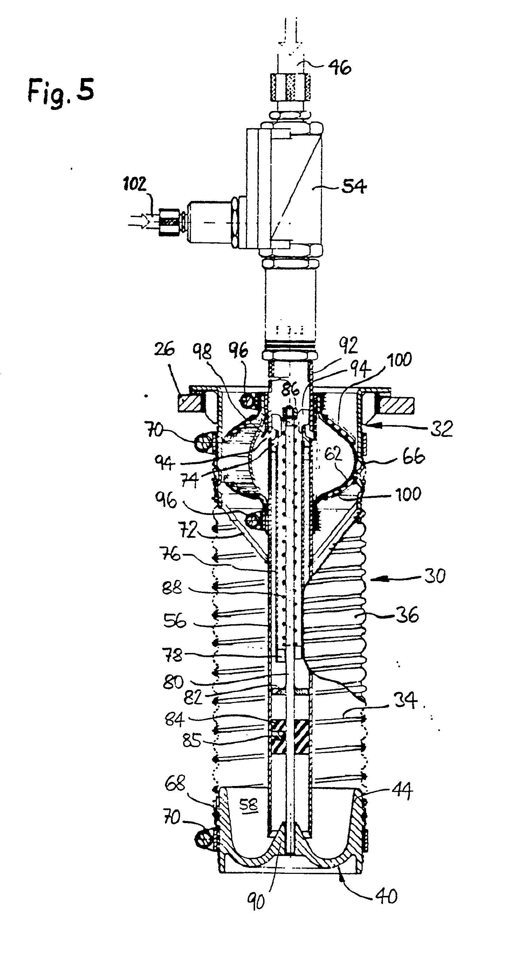

In Fig.5 ist eine Filterpatrone 30 dargestellt, die weitgehend mit der in Fig.3 dargestellten übereinstimmt; deshalb sind einander entsprechende Bauteile mit gleichen Bezugzeichen versehen wie in Fig.3, und im folgenden wird nur auf Abweichungen näher eingegangen.

Die Filterpatrone 30 gemäß Fig.5 hat einen in den Zwischenboden 26 eingehängten Stützring 32 in Form eines Rohrstutzens aus Blech, der an seinem unteren Ende ein Gewinde 66 aufweist. Der Käfig 34 ist von einer Schraubenfeder gebildet und auf das Gewinde 66 aufgeschraubt. Der Umlenkkörper 40 hat außen ein Gewinde 68, auf das der Käfig 34 mit seinem unteren Ende aufgeschraubt ist. Der Filterschlauch 36 ist ein Abschnitt eines in beliebiger Länge vorgefertigten Schlauchs, der über den Umlenkkörper 40 hinweg in loser Wellenform auf den Käfig 34 aufgezogen und am Stützring 32 sowie am Umlenkkörper 40 mit je einer Schlauchschelle 70 dicht befestigt ist.

Das Tauchrohr 56 ist gemäß Fig.5 insgesamt zylindrisch und ist durch schräge Streben 72 am Stützring 32 befestigt. In das obere Ende des Tauchrohrs 56 ist ein Gewindering 74 höhenverstellbar eingeschraubt. Am Gewindering 74 ist ein Stützrohr 76 befestigt, das sich innerhalb des Tauchrohrs 56, gleichachsig mit diesem, nach unten erstreckt und an seinem unteren Ende innere Führungsrippen 78 aufweist. Die Führungsrippen 78 führen eine Kolbenstange 80, die sich durch das Stützrohr 76 und das Tauchrohr 56 axial hindurcherstreckt und im Tauchrohr 56 mit einer durchbrochenen Scheibe 82 und einem abdichtenden Kolben 84 geführt ist. Der Kolben 84 besteht aus einem Kunststoff mit guten Gleiteigenschaften wie Polyamid und ist an der Kolbenstange 80 mit einer Klemmschraube 85 festgeklemmt.

Die Kolbenstange 80 ist oben mit einem Kopfstück 86 und unten mit dem Umlenkkörper 40 verschraubt. Im Stützrohr 76 ist zwischen Kopfstück 86 und Führungsrippen 78 eine Druckfeder 88 angeordnet, die bestrebt ist, die Kolbenstange 80 samt daran befestigtem Kolben 84 und Umlenkkörper 40 in der abgebildeten Ruhestellung zu halten. Der Umlenkkörper 40 hat in seinem mittleren Bereich anstelle der in Fig.3 dargestellten Spitze 42 einen Kegelstumpf 90, der in der Ruhestellung mit radialem Spiel in das untere Ende des Tauchrohrs 56 eingreift und mit diesem einen Ringspalt bildet.

Am Gewindering 74 ist ein Anschlußrohr 92 zentriert und derart abgestützt, daß ein Ringspalt 94 frei bleibt, dessen Größe von der Einstellung des Gewinderings 74 abhängt. Der Ringspalt 94 ist von dem Balg 62 umschlossen, der oben am Anschlußrohr 92 und unten am Tauchrohr 56 mit je einer Schlauchschelle 96 dicht befestigt ist. Der Ringspalt 94 ist von einer ventilartigen Manschette 98 aus einem Elastomer überdeckt, die ebenfalls durch die obere Schlauchschelle 96 am Anschlußrohr 92 festgehalten ist. Zum Schutz des Balgs 62 gegen Platzen ist an beiden Schlauchschellen 96 je ein äußerer Korb 100 befestigt.

Bei normalem Filterbetrieb der in Fig.5 dargestellten Filterpatrone 30 nimmt der Balg 62 eine Ruhestellung ein, in der er, wie in Fig.5 mit gestrichelten Linien angedeutet, eng an der Manschette 98 anliegt, die ihrerseits den Ringspalt 94 verschließt. Gas, das zu filtern ist, strömt aus dem Filtrationsraum 18 (Fig.1) durch den Filterschlauch 36 in das Innere der Filterpatrone 30; dabei lagert sich Staub an der Außenfläche des Filterschlauchs 36 ab, während das von Staub befreite Gas rings um das Tauchrohr 56 unbehindert nach oben abströmt.

Zum Abrütteln des Staubes vom Filterschlauch 36 wird von Zeit zu Zeit Druckluft durch das Ventil 54 in das Anschlußrohr 92 eingeleitet. Das Ventil 54 wird gemäß Fig.5 über eine Steuerleitung 102 pneumatisch gesteuert. Die Druckluft drängt die Manschette 98 nach außen und strömt durch den Ringspalt 94 in den Balg 62, so daß dieser aufgebläht wird; aufeinanderfolgende Zustände des Aufblähens sind in der rechten und der linken Hälfte der Fig.5 mit vollen Linien dargestellt. Die Druckluft strömt gleichzeitig durch das Stützrohr 76 nach unten in das Tauchrohr 56 und gelangt durch die Scheibe 82 hindurch zum Kolben 84.

Sobald die Kraft des auf den Kolben 84 wirkenden Luftdruckes die Druckfeder 88 überwindet, senkt sich der Umlenkkörper 40, wobei der Kegelstumpf 90 aus dem Tauchrohr 56 austritt und der Filterschlauch 36 gegen den verhältnismäßig geringen Widerstand der den Käfig 34 bildenden Schraubenfeder allmählich gestreckt wird. Dabei entsteht innerhalb des Filterschlauchs 36 vorübergehend ein Unterdruck, da der aufgeblähte Balg 62 mehr oder weniger dicht am Stützring 32 anliegt und dadurch verhindert, daß Luft von oben angesaugt wird, während der Kolben 84 die Druckluft noch im Tauchrohr 56 zurückhält.

Die weitere Abwärtsbewegung des Kolbens 84 samt Kolbenstange 80 und Umlenkkörper 40 führt dazu, daß der Kolben 84 aus dem Tauchrohr 56 austritt und infolgedessen Druckluft ausströmt. Der Filterschlauch 36 wird in stark gestrecktem Zustand schlagartig aufgebläht, da der noch aufgeblähte Balg 62 das Abströmen von Luft nach oben verhindert oder zumindest durch Drosselwirkung wesentlich erschwert. Sobald der Kolben 84 ausgetreten ist, wirkt auf ihn nur noch ein Staudruck, der nicht imstande ist, die Druckfeder 88 zusammengedrückt zu halten. Deshalb bewegt sich die Kolbenstange 80 samt Scheibe 82, Kolben 84 und Umlenkkörper 40 wieder aufwärts mit der Folge, daß der Druck im Tauchrohr 56 wieder steigt und den Kolben 84 erneut nach unten drückt. Auf diese Weise entstehen Schwingungen, bei denen der Filterschlauch 36 periodisch gestrafft und gelockert wird, so daß Staubablagerungen an seiner Außenseite gründlich abgerüttelt werden.

Der Kolben 84 ist nach Lösen der Klemmschraube 85 derart längs der Kolbenstange 80 verstellbar, daß die beschriebenen Schwingungen in erwüschtem Ausmaß auftreten. Mit dem gleichen Ziel läßt sich auch die Vorspannung der Druckfeder 88 durch Verstellen des Kopfstücks 86 verändern. Der Durchmesser des Tauchrohrs 56 und somit auch der Durchmesser des Kolbens 84 kann ins Verhältnis zum Durchmesser des Schlauchfilters 36 größer sein als in Fig.5 dargestellt; dadurch erhält der Kolben 84 eine entsprechend größere wirksame Fläche, so daß die beschriebenen Schwingungen auch bei verhältnismäßig geringem Druck der durch das Ventil 54 eingeleiteten Druckluft auftreten.

Das Ventil 54 bleibt nur etwa eine Sekunde lang offen. Wenn es wieder geschlossen wird, kollabiert der Balg 62 allmählich, in etwa zwei Sekunden; die ventilartige Manschette 98 verzögert das Kollabieren des Balgs 62 auf jeden Fall derart, daß der Filterschlauch 36 in der beschriebenen Weise aufgebläht und dadurch von anhaftenden Filterrückständen gründlich befreit wird.

Sobald das Ventil 54 wieder geschlossen und der Balg 62 kollabiert ist, beginnt die Filterpatrone 30 einen neuen Filtrationszyklus. Die Produktbehandlung im Wirbelbett läuft ununterbrochen weiter, da die Ventile 54 so gesteuert sind, daß sie nacheinander öffnen und schließen und die Offnungszeiten zweier zeitlich aufeinanderfolgender Ventile sich nicht oder höchstens geringfügig überlappen.

**Patentansprüche**

1. Filteranordnung zum Entstauben von Gasen, insbesondere in Wirbelbettapparaturen, mit
- mindestens einer Filterpatrone (30), die einen Stützring (32) sowie einen daran befestigten Filterschlauch (30) aufweist und an ihrem vom Stützring (32) entfernten Ende geschlossen ist,
- mindestens einer Gasleitung (46), mit der sich durch den Stützring (32) hindurch ein Gas zum pneumatischen Entstauben des Filterschlauchs (36) in die Filterpatrone (30) einleiten läßt, und
- einem Tauchrohr (56), das an die Gasleitung (46) angeschlossen ist und sich in der Filterpatrone (30) bis in die Wähe von deren geschlossenem Ende erstreckt, dadurch gekennzeichnet,
- daß das Tauchrohr (56) erst an seinem vom Stützring (32) entfernten Ende das zum Entstauben eingeleitete Gas ausströmen läßt und
- daß dem Tauchrohr (56) ein formstabiler Umlenkkörper (40) am geschlossenen Ende der Filterpatrone (30) gegenübersteht, der das Gas in den Ringraum zwischen Tauchrohr (56) und Filterschlauch (36) umlenkt.

2. Filteranordnung nach Anspruch 1, dadurch gekennzeichnet, daß das Tauchrohr (56) gleichachsig mit dem Filterschlauch (36) angeordnet ist.

3. Filteranordnung nach Anspruch 1 oder 2, dadurch gekennzeichnet, daß das Tauchrohr (56) sich in Richtung zum geschlossenen Ende der Filterpatrone (30) hin trompetenartig erweitert.

4. Filteranordnung nach einem der Ansprüche 1 bis 3, dadurch gekennzeichnet, daß das Tauchrohr (56) mit einem elastischen Balg (62) verbunden ist, der im Bereich des Stützrings (32) angeordnet und durch in das Tauchrohr eingeleitetes Gas aufblähbar ist.

5. Filteranordnung nach einem der Ansprüche 1 bis 4, dadurch gekennzeichnet, daß der Umlenkkörper (40) mit dem Stützring (32) durch einen in radialer Richtung starren Käfig (34) verbunden ist, der den Filterschlauch (36) abstützt.

6. Filteranordnung nach Anspruch 5, dadurch gekennzeichnet, daß der Käfig (34) auch in axialer Richtung starr ist, so daß er den Umlenkkörper (40) in bezug auf das Tauchrohr (56) festhält.

7. Filteranordnung nach einem der Ansprüche 1 bis 5, dadurch gekennzeichnet, daß der Umlenkkörper (40) an den Filterschlauch (36) angehängt ist.

8. Filteranordnung nach Anspruch 5, dadurch gekennzeichnet, daß der Käfig (34) von einer Schraubenfeder gebildet und vom Filterschlauch (36) wellenförmig umhüllt ist und der Umlenkkörper (40) in bezug auf das Tauchrohr (56) axial hin- und herbeweglich ist.

9. Filteranordnung nach Anspruch 7 oder 8, dadurch gekennzeichnet, daß der Umlenkkörper (40) am Tauchrohr (56) begrenzt axial verschiebbar geführt ist.

10. Filteranordnung nach Anspruch 9, bei der das Tauchrohr (56) zylindrisch ist, dadurch gekennzeichnet, daß der Umlenkkörper (40) mit einem Kolben (84) fest verbunden ist, der im Tauchrohr (56) abdichtend geführt ist, wenn der Umlenkkörper (40) eine Ruhestellung einnimmt, der jedoch Gas durch das Tauchrohr (56) ausströmen läßt, wenn der Umlenkkörper (40) um eine bestimmte Strecke im Sinne einer Dehnung des Filterschlauchs (36) aus seiner Ruhestellung herausbewegt ist.

11. Filteranordnung nach Anspruch 10, dadurch gekennzeichnet, daß der Kolben (84) vollständig aus dem Tauchrohr (56) herausbewegbar ist.

12. Filteranordnung nach Anspruch 10 oder 11, dadurch gekennzeichnet, daß der Kolben (84) zusammen mit dem Umlenkkörper (40) und mindestens einer Feder (34; 88) ein schwingfähiges System bildet.

13. Filteranordnung nach einem der Ansprüche 1 bis 12, dadurch gekennzeichnet, daß der Umlenkkörper (40) von einer gleichachsig mit dem Tauchrohr (56) angeordneten Schüssel gebildet ist.

14. Filteranordnung nach Anspruch 13, dadurch gekennzeichnet, daß der Umlenkkörper (40) einen mittleren Bodenbereich mit einer axial zum Tauchrohr (56) gerichteten Verjüngung (Spitze 42; Kegelstumpf 90) aufweist.

15. Filteranordnung nach Anspruch 13 oder 14, dadurch gekennzeichnet, daß der Umlenkkörper (40) einen mindestens annähernd zylindrischen äußeren Mantelbereich (44) aufweist, der zusammen mit einem Endbereich des Tauchrohrs (50) einen Ringspalt (58) begrenzt.

16. Filteranordnung nach einem der Ansprüche 1 bis 15 mit mehreren Filterpatronen, bei denen die Tauchrohre (56) sämtlicher Filterpatronen (30) über je ein Ventil (54) an die Gasleitung (46) angeschlossen sind und die Ventile derart gesteuert sind, daß die Tauchrohre zyklisch nacheinander mit Gas gespeist werden, dadurch gekennzeichnet, daß jedem Tauchrohr (56) ein eigener, dem zugehörigen Ventil (54) unmittelbar vorgeschalteter Druckspeicher (52) zugeordnet ist.

**Claims**

1. A filter arrangement for dedusting of gases especially in fluidized bed apparatus, comprising

- at least one filter cartridge (30) including a supporting ring (32) as well as a filter hose (36) fixed thereto, and being closed at its end that is remote from the supporting ring (32),
- at least one gas conduit (46) by way of which gas may be introduced through the supporting ring (32) into the filter cartridge (30) for pneumatically dedusting the filter hose (36), and
- an immersion tube (56) that is connected to the gas conduit (46) and extends in the filter cartridge (30) up to the proximity of its closed end,
characterized
- in that the immersion tube (56) at first allows the gas introduced for the dedusting to flow out at its endremote from the supporting ring (32), and
- that an inherently stable deflecting member (40) is disposed opposite the immersion tube (56) at the closed end of the filter cartridge (30) which deflects the gas in the annular space between the immersion tube (56) and the filter hose (36).

2. The filter arrangement as claimed in claim 1, characterized in that the immersion tube (56) is arranged to be coaxial with the filter hose (36).

3. The filter arrangement as claimed in claim 1 or claim 2, characterized
in that the immersion tube (56) flares like a trumpet in the direction toward the closed end of the filter cartridge (30).

4. The filter arrangement as claimed in any of claims 1 to 3, characterized
in that the immersion tube (56) is connected to an elastic bellows (62) which is disposed in the region of the supporting ring (32) and adapted to be blown up by gas introduced through the immersion tube.

5. The filter arrangement as claimed in any of claims 1 to 4, characterized
in that the deflecting member (40) is connected to the supporting ring (32) by a cage (34) which is rigid in radial direction and supports the filter hose (36).

6. The filter arrangement as claimed in claim 5, characterized
in that the cage (34) is rigid also in axial direction so that it retains the deflecting member (40) with respect to the immersion tube (56).

7. The filter arrangement as claimed in any of claims 1 to 5, characterized
in that the deflecting member (40) is suspended from the filter hose (36).

8. The filter arrangement as claimed in claim 5, characterized
in that the cage (34) is formed by a helical spring and is encased in corrugated fashion by the filter hose (36), and in that the deflecting member(40) is axially reciprocable with respect to the immersion tube (56).

9. The filter arrangement as claimed in claim 7 or claim 8, characterized
in that the deflecting member (40) is guided for limited axial displacement at the immersion tube (56).

10. The filter arrangement as claimed in claim 9 in which the immersion tube (56) is of cylinder shape, characterized
in that the deflecting member (40) is firmly connected to a piston (84) which is sealingly guided in the immersion tube (56) when the deflecting member (40) is in an inoperative position, but which permits gas to flow out through the immersion tube (56) when the deflecting member (40) has been moved out of its inoperative position by a specific distance in the sense of an expansion of the filter hose (36).

11. The filter arrangement as claimed in claim 10, characterized
in that the piston (84) is adapted to be moved entirely out of the immersion tube (56).

12. The filter arrangement as claimed in claim 10 or claim 11, characterized
in that together with the deflecting member (40) and at least one spring (34; 88) the piston (84) constitutes a system which is adapted to vibrate.

13. The filter arrangement as claimed in any of claims 1 to 12, characterized
in that the deflecting member (40) is embodied by a dish arranged coaxially with the immersion tube (56).

14. The filter arrangement as claimed in claim 13, characterized
in that the deflecting member (40) has a central bottom area formed with a taper (tip 42; truncated cone 90) directed axially toward the immersion tube (56).

15. The filter arrangement as claimed in claim 13or claim 14, characterized
in that the deflecting member (40) has an outer jacket portion (44) which is at least approximately cylindrical and together with an end portion of the immersion tube (50) defines an angular gap (58).

16. The filter arrangement as claimed in any of claims 1 to 15, comprising a plurality of filter cartridges, wherein the immersion tubes (56) of all the filter cartridges (30) are connected to the gas line (46) via one valve (54) each, and wherein the valves are controlled in such a manner that gas is fed cyclically and sequentially to the immersion tubes,
characterized
in that each immersion tube (56) has a pressure reservoir of its own arranged directly upstream of the respective associated valve (54).

**Revendications**

1. Ensemble de filtrage pour le dépoussiérage de gaz, notamment dans des appareils à lits tourbillonnaires, comportant :
- au moins une cartouche de filtre (30), qui comporte un anneau d'appui (32) ainsi qu'un tuyau souple de filtrage (30) fixé sur celui-ci et gui est obturée à son extrémité éloignée de l'anneau d'appui (32),
- au moins un conduit de gaz (46), à l'aide duquel un gaz passant au travers de l'anneau d'appui (32) peut pénétrer dans la cartouche de filtre (30) en vue d'un dépoussiérage pneumatique du tuyau souple de filtrage (36), et

- un tube plongeur (56), qui est relié au conduit de gaz (46) et qui s'étend dans la cartouche de filtre (30) jusqu'à proximité de son extrémité fermée,

caractérisé en ce que :

- le tube plongeur (56) permet au gaz introduit pour le dépoussiérage de sortir par son extrémité éloignée de l'anneau d'appui (32), et

- il est prévu, en regard du tube plongeur (56) et à l'extrémité fermée de la cartouche de filtrage (30) un corps de renvoi (40) de forme stable qui renvoie le gaz dans le volume annulaire existant entre le tube plongeur (56) et le tuyau souple de filtrage (36).

2. Ensemble de filtrage selon la revendication 1, caractérisé en ce que le tube plongeur (56) est disposé coaxialement au tuyau souple de filtrage (36).

3. Ensemble de filtrage selon la revendication 1 ou 2, caractérisé en ce que le tube plongeur (56) s'élargit en forme de trompette en direction de l'extrémité fermée de la cartouche de filtre (30).

4. Ensemble de filtrage selon une des revendications 1 à 3, caractérisé en ce que le tube plongeur (56) est relié à un soufflet élastique (62) qui est placé dans la zone de l'anneau d'appui (32) et qui peut être gonflé par le gaz introduit dans le tube plongeur.

5. Ensemble de filtrage selon une des revendications 1 à 4, caractérisé en ce que le corps de renvoi (40) est relié à l'anneau d'appui (32) par une cage (34) rigide dans une direction radiale et qui soutient le tuyau souple de filtrage (36).

6. Ensemble de filtrage selon la revendication 5, caractérisé en ce que la cage (34) est également rigide dans une direction axiale de façon à maintenir le corps de renvoi (40) par rapport au tube plongeur (56).

7. Ensemble de filtrage selon une des revendications 1 à 5, caractérisé en ce que le corps de renvoi (40) est suspendu au tuyau souple de filtrage (36).

8. Ensemble de filtrage selon la revendication 5, caractérisé en ce que la cage (34) est formée par un ressort hélicoïdal et est entourée par le tuyau souple de filtrage (36) de profil ondulé et le corps de renvoi (40) est déplaçable axialement et alternativement par rapport au tube plongeur (56).

9. Ensemble de filtrage selon la revendication 7 ou 8, caractérisé en ce que le corps de renvoi est guidé sur le tube plongeur (56) de façon à pouvoir exécuter une translation axiale limitée.

10. Ensemble de filtrage selon la revendication 9, dans lequel le tube plongeur (56) est cylindrique, caractérisé en ce que le corps de renvoi (40) est relié rigidement à un piston (84) qui est guidé de façon étanche dans le tube plongeur (56) lorsque le corps de renvoi (40) occupe une position de repos, qui permet cependant à du gaz de s'écouler à l'extérieur par le tube plongeur (56) quand le corps de renvoi (40) est déplacé vers l'extérieur à partir de sa position de repos et d'une distance déterminée dans le sens d'un allongement du tuyau souple de filtrage (36).

11. Ensemble de filtrage selon la revendication 10, caractérisé en ce que le piston (84) peut sortir complètement du tube plongeur (56).

12. Ensemble de filtrage selon la revendication 10 ou 11, caractérisé en ce que le piston (84) constitue un système oscillant en coopération avec le corps de renvoi (40) et au moins un ressort (34, 88).

13. Ensemble de filtrage selon une des revendications 1 à 12, caractérisé en ce que le corps de renvoi (40) est constitué par une cuvette disposée coaxialement au tube plongeur (56).

14. Ensemble de filtrage selon la revendication 13, caractérisé en ce que le corps de renvoi (40) comporte une zone centrale de fond pourvue d'un rétrécissement ( pointe 42 ; tronc de cône 90) dirigé axialement vers le tube plongeur (56).

15. Ensemble de filtrage selon la revendication 13 ou 14, caractérisé en ce que le corps de renvoi (40) comporte une zone périphérique extérieure (44) au moins approximativement cylindrique et qui délimite un intervalle annulaire (58) en coopération avec une zone extrême du tube plongeur (50).

16. Ensemble de filtrage selon une des revendications 1 à 15, comportant plusieurs cartouches de filtre, dans lesquelles les tubes plongeurs (56) de toutes les cartouches (30) sont reliés chacun par l'intermédiaire d'une valve (54) avec le conduit de gaz (46) et les valves sont commandées de telle sorte que les tubes plongeurs sont alimentés en gaz cycliquement l'un après l'autre, caractérisé en ce que chaque tube plongeur (56) est associé à son propre accumulateur de pression (52), branché directement en amont de la valve associée (54).

FIG.1

FIG.2

56

60

30

10

26

FIG.3

50

52

54

60

28

26

62

32

34

36

IV        IV

64

30

56

38

64

58

40    42    44

FIG.4

56

58

64

30

36

38    40

Fig. 5